# EUROPÄISCHE PATENTSCHRIFT

(11) **EP 0 675 663 B1**
(45) Veröffentlichungstag und Bekanntmachung des Hinweises auf die Patenterteilung: **17.05.2000**
(21) Anmeldenummer: 95104678.8
(22) Anmeldetag: 29.03.1995
(51) Int. Cl.: H04Q 7/38, H04Q 7/24

(54) **Verfahren zum Herstellen einer Verbindung zwischen mehreren Netzen eines Mobilfunksystems**
Method of connection set-up between several networks of a mobile radio system
Méthode d'établissement d'une connexion entre plusieurs réseaux d'un système radio-mobile

(30) Priorität: 31.03.1994 DE 4411375
(43) Veröffentlichungstag der Anmeldung: 04.10.1995
(73) Patentinhaber: SIEMENS AKTIENGESELLSCHAFT, 80333 München (DE)
(72) Erfinder: Becher, Reinhard, Dr.rer.nat., D-81479 München (DE); Kampschulte, Bernd, Dipl.-Phys., D-58454 Witten (DE)

(56) Entgegenhaltungen:
- WO-A-92/13428
- MOE RAHNEMA: "OVERVIEW OF THE GSM SYSTEM AND PROTOCOL ARCHITECTURE" IEEE COMMUNICATIONS MAGAZINE, Bd. 31, Nr. 4, 1.April 1993, Seiten 92-100, XP000359829
- YU J I: "Overview of EIA/TIA IS-41 (cellular radio standard)" PIMRC '92. THE THIRD IEEE INTERNATIONAL SYMPOSIUM ON PERSONAL, INDOOR AND MOBILE RADIO COMMUNICATIONS PROCEEDINGS (CAT. NO.92TH0488-7), PROCEEDINGS OF 2ND INTERNATIONAL SYMPOSIUM ON PERSONAL, INDOOR AND MOBILE RADIO COMMUNICATIONS, BOSTON, MA, USA, 1, ISBN 0-7803-0841-7, 1992, NEW YORK, NY, USA, IEEE, USA, Seiten 220-224, XP000444612

## Beschreibung

Die Erfindung bezieht sich auf ein Verfahren zum Herstellen einer Verbindung zwischen mehreren Netzen eines Mobilfunksystems. Weiterhin bezieht sich die Erfindung auf ein entsprechendes Mobilfunksystem und eine zugehörige Vermittlungsstelle.

Bei einem Mobilfunksystem ist üblicherweise eine zu versorgende Fläche in eine große Anzahl von Funkzellen eingeteilt. In diesen Funkzellen sind jeweils Basisfunkstationen vorgesehen, über die die Verbindungen zwischen einem öffentlichen Telefonnetz und den Mobilstationen der einzelnen Teilnehmer in der jeweiligen Zelle hergestellt werden können. Ein derartiges Mobilfunksystem ist beispielsweise das vom European Telecommunication Standards Institute (ETSI) standardisierte GSM (Global System for Mobile Communication). Ein ähnliches System ist das DCS 1800/PCN.

In der Systemfläche, d.h. in Fläche, in der das Mobilfunksystem eingeführt ist, ist die Funkzelle die kleinste Servicefläche für Rufe von und zu den Mobilstationen. Die Systemfläche kann eine Mehrzahl von Mobilfunk-Netzflächen (Public Land Mobile Network (PLMN) Areas) umfassen. Eine Mobilfunk-Netzfläche ist die geographische Servicefläche, in der ein Netzbetreiber seine Telekommunikationsdienste bereitstellt, beispielsweise ein Land. Die Mobilfunkteilnehmer können sich mit ihren Mobilstationen üblicherweise in der gesamten Systemfläche, d.h. in allen Mobilfunk-Netzflächen, bewegen und dort die jeweils angebotenen Telekommunikationsdienste in Anspruch nehmen.

In einer Heimatdatei (Home Location Register, HLR), die einer Vermittlungsstelle (Mobile Switching Center, MSC) im Heimat-Funknetz zugeordnet ist sind alle einen dort registrierten Mobilfunkteilnehmer betreffenden Daten gespeichert. Diese Daten werden gegebenenfalls an eine Besucherdatei (Visitor Location Register, VLR) weitergegeben, so daß die Mobilfunkteilnehmer in der gesamten Systemfläche erreicht werden können, unabhängig davon, in welcher Funkzelle sie sich gerade befinden.

Die Vermittlungsstellen stellen Bindeglieder zwischen dem öffentlichen drahtgebundenen Fernsprechnetz (Public Switched Telephone Network, PSTN) oder einem weiteren Mobilfunknetz (Public Land Mobile Network, PLMN) und den Basisfunkstationen her, wobei zwischen den Vermittlungsstellen und den Basisfunkstationen Basisstationssteuerungen vorgesehen sind, die jeweils eine oder mehrere Basisfunkstationen steuern.

Die Besucherdatei speichert Informationen über diejenigen Mobilfunkteilnehmer, die sich gerade in der jeweiligen Besucherdatei-Fläche befinden, und die Heimatdatei speichert alle den Mobilfunkteilnehmer betreffenden Daten, die gegebenenfalls an die Besucherdatei weitergegeben werden.

Im GSM muß beim Verbindungsaufbau zu einer Mobilstation im Rahmen einer Abfrageprozedur die Information über den Aufenthalt der Mobilstation von der Heimatdatei abgefragt werden. Der gerufenenen Mobilstation wird dabei von derjenigen Vermittlungsstelle, bei der sich diese Mobilstation gerade aufhält eine temporäre Rufnummer zugeordnet, die den augenblicklichen Aufenthaltsbereich repräsentiert. Diese temporäre Rufnummer wird für die Lenkung der Gesprächswege verwendet.

So ist in der internationalen Patentanmeldung WO 92/13428 und in dem Aufsatz "Overview of the GSM system and protocol architecture", IEEE Communications magazine, Band 31, Nr.4, April 1993, Seiten 92-100 jeweils ein GSM-Mobilfunksystem beschrieben, bei dem bekanntermaßen Schnittstellen zu anderen Netzen wie z.B. einem leitungsgebundenen Fernsprechnetz (PSTN) oder einem ISDN-Netz oder einem Funknetz vorgesehen sind. Dabei ist die Leitweglenkung (Routing) für den Aufbau von ankommenden Verbindungen (incoming call / mobile terminating calls) in dem GSM-Funknetz beschrieben. Dazu gehört insbesondere die Abfrage des Heimatregisters (HLR) - bekannt unter dem Begriff "HLR-Interrogation" - des angerufenen mobilen Teilnehmers, bevor anschließend anhand der bereitgestellten temporären Rufnummer (MSRN) die Verbindung zu der für den angerufenen Teilnehmer zuständigen Vermittlungsstelle (MSC) geroutet wird. Dies ist die Vorgehensweise innerhalb eines einzigen GSM-Funknetzes.

Die verschiedenen Fallgestaltungen auf Seite 94, linke Spalte des Aufsatzes (Addressing and Call Routing) geben Beispiele an, aus welchem Netz - Festnetz (Fixed Network PST/ISDN) oder Funknetz (PLMN) - der mobile Teilnehmer angerufen wird und ob es sich um einen Anruf aus einem Netz desselben Landes - gleichbedeutend mit einem nationalen Anruf - oder aus einem Netz eines anderen Landes - gleichbedeutend mit einem internationalen Anruf - handelt, jeweils erkennbar von der Vermittlungsstelle durch Auswertung des Netzcodes (NDC).

Bei Verbindungen, die mehrere Funknetze umfassen, beispielsweise bei internationalen Verbindungen werden die Gespräche bis zu einer Vermittlungsstelle im Heimat-Funknetz des gerufenen Teilnehmers aufgebaut. Diese Vermittlungsstelle des Heimat-Funknetzes führt die genannte Abfrageprozedur durch und stellt dann eine Verbindung zur Vermittlungsstelle in dem weiteren Funknetz her, in dem sich die Mobilstation gerade befindet.

Da zunächst eine Gesprächsverbindung zur Vermittlungsstelle im Heimat-Funknetz und dann von dieser Vermittlungsstelle eine Verbindung zur Vermittlungsstelle in dem weiteren Funknetz hergestellt wird, in dem sich die Mobilstation gerade befindet, ist die Wegführung nicht optimal. Eine optimale Wegführung ist bisher nur innerhalb eines Funknetzes möglich.

Der Erfindung liegt daher die Aufgabe zugrunde, ein Verfahren anzugeben, bei dem eine optimale Wegführung für die Gespräche auch dann ermöglicht wird, wenn sich eine Vermittlungsstelle, von der ein Ruf ausgeht und eine Vermittlungsstelle, der die gerufene Mobilstation gerade zugeordnet ist, in Funknetzen befinden, die vom Heimat-Funknetz der Mobilstation verschieden sind. Weiterhin liegt der Erfindung die Aufgabe zugrunde, ein entsprechendes Mobilfunksystem und eine zugehörige Vermittlungsstelle anzugeben.

Erfindungsgemäß wird die Aufgabe bei dem Verfahren, dem Mobilfunksystem und der Vermittlungsstelle der eingangs genannten Art durch die Merkmale der Patentansprüche 1, 6 bzw. 7 gelöst. Weiterbildungen der Erfindung ergeben sich aus den Unteransprüchen.

Die Erfindung bietet den Vorteil, daß eine einfache Wegführung für die Gespräche über mehrere Funknetze hinweg erreicht wird und damit das Mobilfunksystem besser ausgenutzt werden kann, da Umwege vermieden werden, die ansonsten zu einer unnötigen Belastung des Mobilfunksystems führen würden.

Ausführungsbeispiele der Erfindung werden im folgenden anhand von Zeichnungen näher erläutert. Es zeigen:
- Fig. 1: ein Blockbild eines Mobilfunknetzes,
- Fig. 2: eine schematische Darstellung von Serviceflächen in einem Mobilfunksystem,
- Fig. 3: Eine schematische Darstellung des Ablaufs eines Rufs zu einer Mobilstation,
- Fig. 4: eine schematische Darstellung einer herkömmlichen internationalen Verbindung,
- Fig. 5: eine schematische Darstellung des Herstellens einer internationalen Verbindung gemäß einem ersten Ausführungsbeispiel der Erfindung, und
- Fig. 6: eine schematische Darstellung des Herstellens einer internationalen Verbindung gemäß einem zweiten Ausführungsbeispiel der Erfindung.

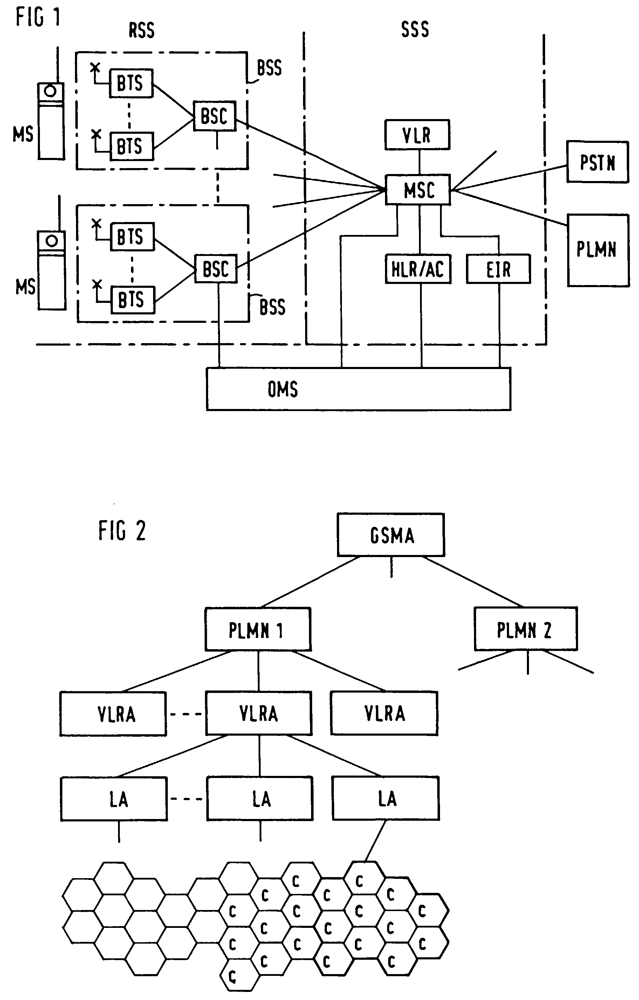

Der in Fig. 1 dargestellte Teil eines Mobilfunknetzes ist auf der Basis eines elektronischen Vermittlungssystems ausgebildet. Er enthält ein Vermittlungssystem SSS, ein Funksystem RSS, und ein Bedien- und Wartungssystem OMS. Das Vermittlungssystem SSS stellt die Verbindung zwischen dem Funksystem RSS und einem öffentlichen Telefonnetz PSTN, beispielsweise einem ISDN-Netz, oder mit einer anderen Vermittlungsstelle des selben oder eines anderen Mobilfunknetzes PLMN her. Das Funksystem RSS wird eingeteilt in Basisstationen BSS und mehrere Mobilstationen MS. Die Basisstationen BSS stellen alle Funktionen zur Verfügung, die erforderlich sind, um eine Funkdeckung von Zellen zu gewährleisten und die Mobilstationen MS stellen alle Funktionen für den Teilnehmer bereit. Jede Basisstation BSS umfaßt eine Basisstationssteuerung BSC, die alle Funktionen für die Funkübertragung durchführt, lokale Vorgänge bearbeitet und Wartungsfunktionen ausführt und eine oder mehrere Basisfunkstationen BTS. Eine Basisstationssteuerung BSC verwaltet eine Vielzahl von Basisfunkstationen BTS. Die Basisfunkstationen BTS führen alle funktechnischen Funktionen aus und sie unterstützen die Funkschnittstelle zu den Mobilstationen MS. Eine Basisfunkstation BTS versorgt eine oder mehrere Zellen. Ein derartiges System ist beispielsweise in einer Broschüre "D 900 Mobile Communication System" SYD der Siemens AG beschrieben.

Das Vermittlungssystem SSS enthält neben einer Mobilfunk-Vermittlungsstelle MSC (Mobile Services Switching Center) eine mit dieser verbundene Heimatdatei HLR (Home Location Register), in der Daten von dort registrierten Mobilstationen MS gespeichert sind, eine Besucherdatei VLR (Visitor Location Register) und ein Geräte-Identifizierungsregister EIR (Equipment Identification Register). Die Heimatdatei HLR ist außerdem mit einem Authentifikationszentrum AC (Authentification Center) verbunden. Die Besucherdatei VLR speichert Informationen über diejenigen Mobilstationen MS, die sich gerade in der jeweiligen Besucherdatei-Fläche (Visitor Location Register Area) VLRA befinden. Die in der Heimatdatei HLR gespeicherten, die dort registrierten Mobilstationen MS betreffenden Daten werden gegebenenfalls an die Besucherdatei VLR weitergegeben. Das Authentifikationszentrum AC speichert die Schlüssel, die erforderlich sind, um zu prüfen, ob eine Mobilstation MS berechtigt ist, das Mobilfunknetz zu benutzen.

Wie es in Fig. 2 dargestellt ist, bilden eine oder mehrere Funkzellen C eine Lokalisierungsfläche LA (Location Area). Eine Lokalisierungsfläche LA ist eine Servicefläche, in der sich ein Mobilfunkteilnehmer frei bewegen kann, ohne daß ein Lokalisierungsregister VLR oder HLR auf den neuesten Stand gebracht werden muß. Die Größe der Lokalisierungsfläche LA wird vom Netzbetreiber entsprechend den Erfordernissen des Verkehrsaufkommens und der Bewegungsdichte festgelegt.

Eine oder mehrere Lokalisierungsflächen LA bilden eine Besucherdatei-Fläche (Visitor Location Register Area) VLRA. Die Besucherdatei-Fläche VLRA kann die Größe eines Teils einer Stadt bis zur Größe eines ganzen Landes annehmen und sie ist derjenige Teil eines Netzes, der von einer Besucherdatei VLR unterstützt wird. Eine oder mehrere Besucherdatei-Flächen VLRA bilden ein Mobilfunk-Netzfläche PLMN1 (Public Land Mobile Network Area), d.h. die geographische Servicefläche, in der ein Netzbetreiber seine Telekommunikationsdienste bereitstellt. Neben der Mobilfunk-Netzfläche PLMN1 können noch eine oder mehrere weitere Mobilfunk-Netzflächen PLMN2 vorgesehen sein. Diese Mobilfunk-Netzflächen PLMN können in einem PLMN-Land vorgesehen sein und eine oder mehrere PLMN-Länder bilden eine Mobilfunk-Systemfläche GSMA.

Infolge der Mobilität der Mobilfunkteilnehmer muß ein Mobilfunknetz PLMN immer über den gegenwärtigen Aufenthalt eines Mobilfunkteilnehmers informiert sein. Die Besucherdatei VLR beinhaltet alle Informationen über diejenigen Mobilstationen MS, die sich gerade in derjenigen Besucherdatei-Fläche VLRA aufhalten, die sie überwacht. Um diese Information bereitzustellen, muß das Mobilfunknetz PLMN immer auf dem neuesten Stand des Aufenthalts eines jeden Mobilfunkteilnehmers, bzw. der zugehörigen Mobilstation MS sein.

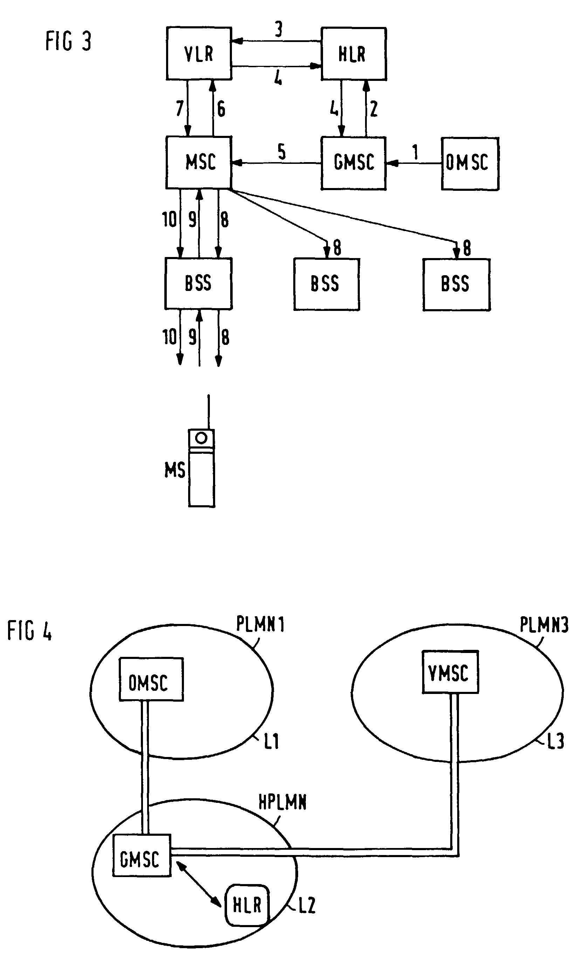

Wie es in Fig. 3 dargestellt ist, wird bei einem von einer Ausgangs-Vermittlungsstelle OMSC (Originating MSC) bei einer Netzübergangs-Vermittlungsstelle GMSC (Gateway-MSC) ankommenden Ruf (1) zu einer Mobilstation MS von der Netzübergangs-Vermittlungsstelle GMSC zunächst die Heimatdatei HLR der gerufenen Mobilstation MS abgefragt (2). Diese Heimatdatei HLR sendet eine Anforderung (3) an das Besucherregister VLR, in deren Gebiet sich die Mobilstation MS gerade aufhält. Auf der Basis einer temporären Rufnummer MSRN (Mobile Station Roaming Number), die von der Besucherdatei VLR über die Heimatdatei HLR an die End-Vermittlungsstelle GMSC (4) weitergegeben wird, leitet die Netzübergangs-Vermittlungsstelle GMSC den Ruf an diejenige Vermittlungsstelle MSC weiter, die diejenige Lokalisierungsfläche VLRA bedient, in der sich die Mobilstation MS gerade aufhält (5). Diese Vermittlungsstelle MSC fordert (6) von ihrer Besucherdatei VLR die notwendigen Informationen an, die für den Rufaufbau erforderlich sind (7). Die Mobilstation MS wird dann mit einem Suchruf (8) an alle Basisfunkstationen BTS der Lokalisierungsfläche VLRA gerufen. Nach einer Rufantwort (9) wird die Funkzelle C ermittelt, und die Gesprächsverbindung von der Netzübergangs-Vermittlungsstelle GMSC zur Vermittlungsstelle MSC hergestellt (10).

Bei der in Fig. 4 gezeigten Darstellung wird angenommen, daß sich eine rufende Teilnehmerstation und damit die zugehörige Ausgangs-Vermittlungsstelle OMSC, über die der Ruf in das Mobilfunksystem eingegeben wird, nicht im Heimat-Funknetz HPLMN (Home PLMN), beispielsweise nicht im selben Land L2, sondern in einem anderen Netz PLMN1, beispielsweise in einem anderen Land L1 befindet und sich die gerufene Mobilstation MS in einem weiteren Netz PLMN3, beispielsweise in einem weiteren Land L3 befindet. In diesem Fall wird der Ruf von der Ausgangs-Vermittlungsstelle OMSC im Land L1 zunächst zur Netzübergangs-Vermittlungsstelle GMSC im Heimat-Funknetz HPLMN im Land L2 übertragen. Dort stellt, entsprechend dem in Fig. 3 dargestellten Ablauf die Netzübergangs-Vermittlungsstelle GMSC fest, daß sich die Mobilstation MS im Netz PLMN3 im Land L3 befindet und sie stellt dann die entsprechende Verbindung zu einer Besuchs-Vermittlungsstelle VMSC im Land L3 her. Wie der Fig. 4 zu entnehmen ist, erfolgt somit beim bekannten Verfahren der Rufaufbau und damit die Gesprächsführung vom Netz PLMN1 im Land L1 über das Heimat-Funknetz HPLMN im Land L2 zum Netz PLMN3 im Land L3, d.h. das Heimat-Funknetz HPLMN wird auch in die Streckenführung involviert, obwohl nur Gespräche und/oder Daten zwischen den Netzen PLMN1 und PLMN3 übertragen werden sollen, d.h. es erfolgt keine Optimierung der Verbindungswege zwischen den Netzen PLMN1 und PLMN3 bzw. zwischen den Ländern L1 und L3.

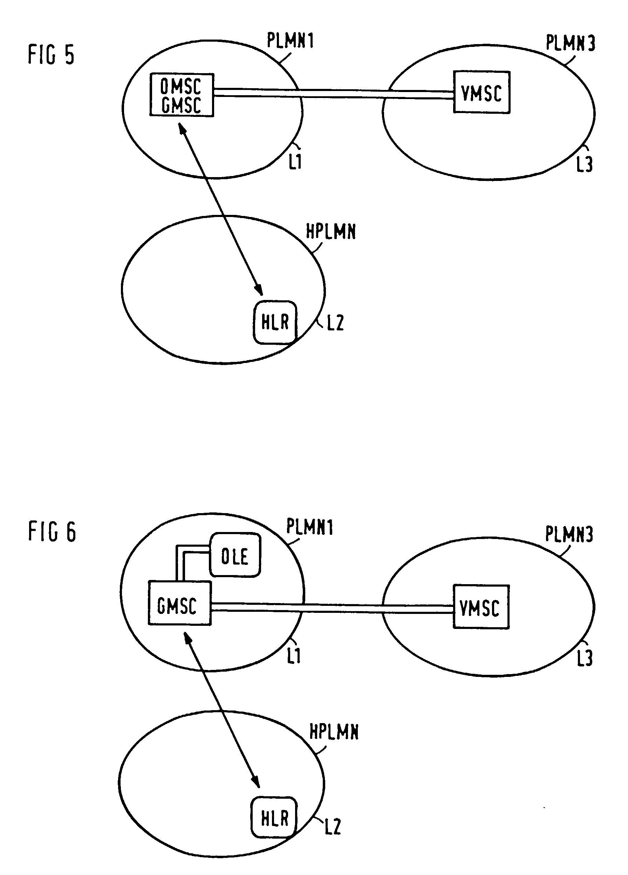

Bei dem in Fig. 5 dargestellten erfindungsgemäßen Verfahren übernimmt die Ausgangs-Vermittlungsstelle OMSC im Land L1 auch die Funktion der Netzübergangs-Vermittlungsstelle GMSC. Die Ausgangs-Vermittlungsstelle OMSC stellt eine Verbindung zur Heimatdatei HLR der gerufenen Mobilstation MS im Heimat-Funknetz HPLMN im Land L2 her und erkennt anhand der Rufnummer der gerufenen Mobilstation MS wegen des internationalen Zieles daß sich die gerufene Mobilstation MS im Netz PLMN3 im Land L3 aufhält. Die von der Heimatdatei HLR zur Ausgangs-Vermittlungsstelle OMSC übertragenen Informationen enthalten außer einem Ländercode CC (Country Code) auch einen dem dortigen Netzwerk PLMN3 zugeordneten Netzcode NDC (Network Destination Code). Damit stehen in der Ausgangs-Vermittlungsstelle OMSC die temporäre Rufnummer MSRN, der Ländercode CC und der Netzcode NDC zur Verfügung, so daß vom Netz PLMN1 im Land L1 direkt eine Verbindung zum Netz PLMN3 im Land L3 geschaltet werden kann und damit eine Wegoptimierung stattfinden kann. Die Verbindung für die Übertragung der Gespräche und/oder Daten muß damit nicht mehr über das Heimat-Funknetz HPLMN im Land L2 geführt werden, sondern kann direkt von der Ausgangs-Vermittlungsstelle OMSC im Land L1 zur Besuchs-Vermittlungsstelle VMSC im Land L3 geschaltet werden.

Entsprechendes gilt für einen Verbindungsaufbau vom Netz PLMN1 im Land L1 unter Verwendung einer Ausgangs-Leitungseinheit OLE, die eine beliebige Vermittlungsstelle sein kann, zu einer Mobilstation MS im Netz PLMN3 im Land L3. In diesem Fall ist die Ausgangs-Vermittlungsstelle OMSC mit der Netzübergangs-Vermittlungsstelle GMSC identisch. Ein derartiger Verbindungsaufbau ist schematisch in Fig. 6 dargestellt.

## Patentansprüche

1. Verfahren zum Herstellen einer Verbindung zwischen mehreren Funknetzen (PLMN1, PLMN3) eines Mobilfunksystems, wobei die Verbindung von einem ersten Mobilfunknetz (PLMN1) zu einer Mobilstation (MS) in einem weiteren Mobilfunknetz (PLMN3) hergestellt wird und wobei beim Herstellen der Verbindung durch eine Ausgangs-Vermittlungsstelle (OMSC) Daten abgerufen werden, die in einer der Mobilstation (MS) zugeordneten Heimatdatei (HLR) im Heimat-Funknetz (HPLMN) der Mobilstation (MS) gespeichert sind, und bei dem
- die Vermittlungsstelle (OMSC) im ersten Mobilfunknetz (PLMN1) nach dem Abfragen der Daten von der Heimatdatei (HLR) im Heimat-Funknetz (HPLMN) der Mobilstation (MS) unter Verwendung eines Ländercodes (CC) und eines Netzcodes (NDC) eine direkte Verbindung für die Übertragung von Gesprächen und/oder Daten zum weiteren Mobilfunknetz (PLMN3) ohne eine Zwischenschaltung des Heimat-Funknetzes (HPLMN) der Mobilstation (MS) herstellt.

2. Verfahren nach Anspruch 1,
**dadurch gekennzeichnet,**
daß die Vermittlungsstelle im ersten Netz (PLMN1) die Ausgangs-Vermittlungsstelle (OMSC) darstellt und gleichzeitig die Funktionen einer Netzübergangs-Vermittlungsstelle (GMSC) durchführt.

3. Verfahren nach Anspruch 1,
**dadurch gekennzeichnet,**
daß die Verbindung über eine Ausgangs-Leitungseinheit (OLE) im ersten Netz (PLMN 1) aufgebaut wird, die mit einer dortigen Vermittlungsstelle (MSC) verbunden ist und daß diese Vermittlungsstelle (MSC) gleichzeitig die Funktionen einer Netzübergangs-Vermittlungsstelle (GMSC) durchführt.

4. Verfahren nach einem der vorangehenden Ansprüche,
**dadurch gekennzeichnet,**
daß zur Vermittlungsstelle (OMSC) im ersten Netz (PLMN1) die vollständige temporäre Rufnummer (MSRN) übertragen werden.

5. Verfahren nach Anspruch 4,
**dadurch gekennzeichnet,**
daß ein Ländercode (CC) und ein Netzcode (NDC) in der Heimatdatei (HLR) gespeichert sind.

6. Mobilfunksystem zum Herstellen einer Verbindung zwischen mehreren Funknetzen (PLMN1, PLMN3), wobei eine Verbindung von einem ersten Mobilfunknetz (PLMN1) zu einer Mobilstation (MS) in einem weiteren Mobilfunknetz (PLMN3) hergestellt wird und beim Herstellen der Verbindung von einer Ausgangs-Vermittlungsstelle (OMSC) Daten abgerufen werden, die in einer der Mobilstation (MS) zugeordneten Heimatdatei (HLR) im Heimat-Funknetz (HPLMN) der Mobilstation (MS) gespeichert sind, und bei dem
- die Vermittlungsstelle (OMSC) im ersten Mobilfunknetz (PLMN1) derart ausgebildet ist, daß sie nach dem Abfragen der Daten von der Heimatdatei (HLR) im Heimat-Funknetz (HPLMN) der Mobilstation (MS) unter Verwendung eines Ländercodes (CC) und eines Netzcodes (NDC) eine direkte Verbindung für die Übertragung von Gesprächen und/oder Daten zum weiteren Mobilfunknetz (PLMN3) ohne eine Zwischenschaltung des Heimat-Funknetzes (HPLMN) der Mobilstation (MS) herstellt.

7. Vermittlungsstelle für ein Mobilfunksystem zum Herstellen einer Verbindung zwischen mehreren Funknetzen (PLMN1, PLMN3), bei dem eine Verbindung von einem ersten Mobilfunknetz (PLMN1) zu einer Mobilstation (MS) in einem weiteren Mobilfunknetz (PLMN3) hergestellt wird und bei dem beim Herstellen der Verbindung von einer Ausgangs-Vermittlungsstelle (OMSC) Daten abgerufen werden, die in einer der Mobilstation (MS) zugeordneten Heimatdatei (HLR) im Heimat-Funknetz (HPLMN) der Mobilstation (MS) gespeichert sind, und bei dem
- die Vermittlungsstelle (OMSC) derart ausgebildet ist, daß sie nach dem Abrufen der Daten von der Heimatdatei (HLR) im Heimat-Funknetz (HPLMN) der Mobilstation (MS) unter Verwendung eines Ländercodes (CC) und eines Netzcodes (NDC) eine direkte Verbindung für die Übertragung von Gesprächen und/oder Daten vom ersten Mobilfunknetz (PLMN1) zum zweiten Mobilfunknetz (PLMN2) ohne eine Zwischenschaltung des Heimat-Funknetzes (HPLMN) der Mobilstation (MS) herstellt.

## Claims

1. Method for setting up a connection between a plurality of radio networks (PLMN1, PLMN3) of a mobile radio system, the connection being set up from a first mobile radio network (PLMN1) to a mobile station (MS) in a further mobile radio network (PLMN3), and in which data are called by an originating switching centre (OMSC) when the connection is set up and are stored in a home file (HLR), assigned to the mobile station (MS), in the home radio network (HPLMN) of the mobile station (MS), and in which
- after the interrogation of the data of the home file (HLR) in the home radio network (HPLMN) of the mobile station (MS), the switching centre (OMSC) in the first mobile radio network (PLMN1) sets up, using a country code (CC) and a network code (NDC), a direct connection for the transmission of calls and/or data to the other mobile radio network (PLMN3) without intermediate connection of the home radio network (HPLMN) of the mobile station (MS).

2. Method according to Claim 1, characterized in that the switching centre in the first network (PLMN1) constitutes the originating switching centre (OMSC) and simultaneously carries out the functions of a network gateway switching centre (GMSC).

3. Method according to Claim 1, characterized in that the connection is set up by means of an output line unit (OLE) in the first network (PLMN1), which unit is connected to a switching centre (MSC) there, and in that this switching centre (MSC) simultaneously carries out the functions of a network gateway switching centre (GMSC).

4. Method according to one of the preceding claims, characterized in that the complete temporary call number (MSRN) is transmitted to the switching centre (OMSC) in the first network (PLMN1).

5. Method according to Claim 4, characterized in that a country code (CC) and a network code (NDC) are stored in the home file (HLR).

6. Mobile radio system for setting up a connection between a plurality of radio networks (PLMN1, PLMN3), in which a connection is set up from a first mobile radio network (PLMN1) to a mobile station (MS) in a further mobile radio network (PLMN3), and during the setting-up of the connection from an originating switching centre (OMSC) data are called and are stored in a home file (HLR), assigned to the mobile station (MS), in the home radio network (HPLMN) of the mobile station (MS), and in which
- the switching centre (OMSC) in the first mobile radio network (PLMN1) is embodied in such a way that after the interrogation of the data of the home file (HLR) in the home radio network (HPLMN) of the mobile station (MS) the said switching centre sets up, using a country code (CC) and a network code (NDC), a direct connection for the transmission of calls and/or data to the other mobile radio network (PLMN3) without an intermediate connection of the home radio network (HPLMN) of the mobile station (MS).

7. Switching centre for a mobile radio system for setting up a connection between a plurality of radio networks (PLMN1, PLMN3), in which a connection is set up from a first mobile radio network (PLMN1) to a mobile station (MS) in a further mobile radio network (PLMN3), and during the setting-up of the connection from an originating switching centre (OMSC) data are called and are stored in a home file (HLR), assigned to the mobile station (MS), in the home radio network (HPLMN) of the mobile station (MS), and in which
- the switching centre (OMS) is embodied in such a way that after the calling of the data from the home file (HLR) in the home radio network (HPLMN) of the mobile station (MS) the said switching centre sets up, using a country code (CC) and a network code (NDC), a direct connection for the transmission of calls and/or data from the first mobile radio network (PLMN1) to the second mobile radio network (PLMN2) without an intermediate connection of the home radio network (HPLMN) of the mobile station (MS).

## Revendications

1. Procédé pour établir une communication entre plusieurs réseaux radio (PLMN1, PLMN3) d'un système de téléphonie mobile, la communication étant établie à partir d'un premier réseau de téléphonie mobile (PLMN1) vers un poste mobile (MS) dans un autre réseau de téléphonie mobile (PLMN3) et un centre de commutation de départ (OMSC) sollicitant, lors de l'établissement de la communication, des données qui sont mémorisées dans un fichier d'attache (HLR), affecté au poste mobile (MS), dans le réseau radio d'attache (HPLMN) du poste mobile (MS), et au cours duquel
- le centre de commutation (OMSC), dans le premier réseau de téléphonie mobile (PLMN1), établit, après l'appel des données du fichier d'attache (HLR) dans le réseau radio d'attache (HPLMN) du poste mobile (MS), en utilisant un indicatif de pays (CC) et un indicatif de réseau (NDC), une liaison directe pour la transmission de conversations et / ou de données vers l'autre réseau de téléphonie mobile (PLMN3), sans passer par le réseau radio d'attache (HPLMN) du poste mobile (MS).

2. Procédé selon la revendication 1
**caractérisé par le fait**
que le centre de commutation dans le premier réseau (PLMN1) constitue le centre de commutation de départ (OMSC) et exécute, simultanément, les fonctions d'un centre de commutation de transit (GMSC).

3. Procédé selon la revendication 1
**caractérisé par le fait**
que la communication est établie à travers une unité de ligne de départ (OLE) dans le premier réseau (PLMN1), laquelle est reliée à un centre de commutation local (MSC) et que ce centre de commutation (MSC) exécute, simultanément, les fonctions d'un centre de commutation de transit (GMSC).

4. Procédé selon l'une des revendications précédentes
**caractérisé par le fait**
que la totalité du numéro d'appel temporaire (MSRN) est transmise au centre de commutation (OMSC) dans le premier réseau (PLMN1).

5. Procédé selon la revendication 4
**caractérisé par le fait**
qu'un indicatif de pays (CC) et un indicatif de réseau (NDC) sont enregistrés dans le fichier d'attache (HLR).

6. Procédé pour établir une communication entre plusieurs réseaux radio (PLMN1, PLMN3), une communication étant établie à partir d'un premier réseau de téléphonie mobile (PLMN1) vers un poste mobile (MS) dans un autre réseau de téléphonie mobile (PLMN3) et un centre de commutation de départ (OMSC) sollicitant, lors de l'établissement de la communication, des données qui sont mémorisées dans un fichier d'attache (HLR), affecté au poste mobile (MS), dans le réseau radio d'attache (HPLMN) du poste mobile (MS), et dans lequel
- le centre de commutation (OMSC), dans le premier réseau de téléphonie mobile (PLMN1), est conçu de telle sorte que, après l'appel des données du fichier d'attache (HLR) dans le réseau radio d'attache (HPLMN) du poste mobile (MS), une liaison directe est établie, pour la transmission de conversations et / ou de données vers l'autre réseau de téléphonie mobile (PLMN3), en utilisant un indicatif de pays (CC) et un indicatif de réseau (NDC), sans passer par le réseau radio d'attache (HPLMN) du poste mobile (MS).

7. Centre de commutation pour un réseau de téléphonie mobile pour établir une communication entre plusieurs réseaux radio (PLMN1, PLMN3), dans lequel une communication est établie à partir d'un premier réseau de téléphonie mobile (PLMN1) vers un poste mobile (MS) dans un autre réseau de téléphonie mobile (PLMN3) et dans lequel, lors de l'établissement de la communication, un centre de commutation de départ (OMSC) sollicite des données qui sont mémorisées dans un fichier d'attache (HLR), affecté au poste mobile (MS), dans le réseau radio d'attache (HPLMN) du poste mobile (MS), et dans lequel
- le centre de commutation (OMSC) est conçu de telle sorte que, après l'appel des données du fichier d'attache (HLR) dans le réseau radio d'attache (HPLMN) du poste mobile (MS), une liaison directe est établie, pour la transmission de conversations et / ou de données du premier réseau de téléphonie mobile (PLMN1) vers le deuxième réseau de téléphonie mobile (PLMN2), en utilisant un indicatif de pays (CC) et un indicatif de réseau (NDC), sans passer par le réseau radio d'attache (HPLMN) du poste mobile (MS).
